## Europäisches Patentamt
## European Patent Office
## Office européen des brevets

(19)

(11) Numéro de publication: **0 224 963**
**A1**

(12)
# DEMANDE DE BREVET EUROPEEN

(21) Numéro de dépôt: **86202097.1**

(22) Date de dépôt: **26.11.86**

(51) Int. Cl.⁴: **G 06 F 7/552**

(30) Priorité: **29.11.85 FR 8517685**

(43) Date de publication de la demande:
**10.06.87 Bulletin 87/24**

(84) Etats contractants désignés:
**DE FR GB**

(71) Demandeur: **TELECOMMUNICATIONS RADIOELECTRIQUES ET TELEPHONIQUES T.R.T.**
**88, rue Brillat Savarin**
**F-75013 Paris(FR)**

(84) Etats contractants désignés:
**FR**

(71) Demandeur: **N.V. Philips' Gloeilampenfabrieken**
**Groenewoudseweg 1**
**NL-5621 BA Eindhoven(NL)**

(84) Etats contractants désignés:
**DE GB**

(72) Inventeur: **Masson, Jacques**
**Société Civile S.P.I.D. 209 rue de l'Université**
**F-75007 Paris(FR)**

(72) Inventeur: **Picel, Zdenek**
**Société Civile S.P.I.D. 209 rue de l'Université**
**F-75007 Paris(FR)**

(74) Mandataire: **Chaffraix, Jean et al,**
**Société Civile S.P.I.D. 209, rue de l'Université**
**F-75007 Paris(FR)**

(54) Dispositif de sommation de carrés.

(57) Ce dispositif de sommation de carrés est prévu pour calculer la somme des carrés de "n" nombres à "m" éléments binaires, n et m étant des nombres entiers supérieurs ou égaux à "1", il est constitué à partir d'un réseau systolique 14 qui est formé de cellules identiques disposées en lignes et colonnes et autour duquel est disposé un premier circuit périphérique 16 pour fournir des signaux à la ligne supérieure, un deuxième circuit périphérique 18 pour fournir des signaux à la colonne d'entrée recevant en outre des signaux d'un circuit de présentation 20 servant d'interface entre les "n" nombres et le réseau systolique et enfin un circuit de sortie 22 connecté à la ligne inférieure. Chaque ligne du réseau est affectée au calcul du carré de chacun des nombres ; par des liaisons entre les lignes on effectue des reports de calcul de la ligne du dessus à la ligne du dessous. Le circuit de sortie est constitué par un organe d'addition fournissant le résultat à partir des reports de la dernière ligne.
Application : codage de la voix.

./...

EP 0 224 963 A1

FIG. 1

## DISPOSITIF DE SOMMATION DE CARRES.

La présente invention concerne un dispositif de sommation de carrés prévu pour calculer la somme des carrés de "n" nombres à "m" éléments binaires, n et m étant des nombres entiers supérieurs ou égaux à "1", dispositif constitué à partir d'un réseau systolique qui est formé de cellules identiques disposées en lignes et colonnes recevant des signaux d'un circuit de présentation des "n" nombres, et autour duquel sont disposés un premier circuit périphérique pour fournir des signaux à la ligne supérieure, un deuxième circuit périphérique pour fournir des signaux à la colonne d'entrée, et enfin un circuit de sortie connecté à la ligne inférieure.

Pour effectuer le carré d'un nombre, on peut utiliser un réseau systolique conçu pour exécuter l'opération de multiplication, le multiplicande et le multiplicateur étant alors dans ce cas, identiques. Cependant, l'obtention de la somme exige encore un traitement supplémentaire.

Il existe des applications, qui exigent un grand nombre de calculs de carrés, comme, par exemple, la quantification vectorielle qui consiste à déterminer parmi un ensemble de vecteurs de référence celui qui se rapproche le plus d'un vecteur donné à quantifier.

On pourra consulter à ce sujet l'article de M.J. SABIN et R.M. GRAY intitulé "Product Code Vector Quantizers for Wave form and Voice Coding" paru dans l'IEEE Transactions on Acoustics, Speech, and Signal Processing, Vol. ASSP-32, N°3, juin 1984.

Dans cet article, on est confronté au problème de rendre minimale une grandeur $d(x ; \overset{\circ}{x})$ où x représente le vecteur à quantifier et $\overset{\circ}{x}$ l'ensemble de N vecteurs de référence $x_i(i = 1, 2,.., N)$. Pour tout vecteur à quantifier, on cherche donc parmi les vecteurs celui qui rend minimale ladite grandeur. En prenant des hypothèses simplificatrices, $d(x \; \dot{x})$ peut prendre la valeur :

$$d(x \; x) = ||x-\dot{x}||^2$$
$$= (x^1-\dot{x}^1)^2 + (x^2-\dot{x}^2)^2 + \ldots + (x^N-\dot{x}^N)^2$$

où $x^1, x^2, \ldots, x^N$ sont les composantes du vecteur $x$
et où $\dot{x}^1, \dot{x}^2, \ldots, \dot{x}^N$ sont les composantes du vecteur $\dot{x}$.
(voir la référence [1] donnée dans l'article c'est-à-dire : "Vector Quantization..." de H.ABUT paru dans IEEE Transactions on Acoustics, Speech and Signal Processing, Vol.ASSP-30, N°3, juin 1982, se reporter plus précisément à la formule (2)). Ceci implique un grand nombre de calculs de carrés $(x^j-\dot{x}^j)^2$ et un calcul de leur somme.

La présente invention propose un dispositif de sommation de carrés du genre mentionné dans le préambule qui permet de calculer directement cette somme sans passer par l'intermédiaire d'un traitement supplémentaire.

Pour cela, un dispositif de traitement numérique pour calculer la somme des carrés de "n" nombres est remarquable en ce que chaque ligne du réseau est affectée au calcul du carré de chacun des nombres, en ce qu'il est prévu des liaisons entre les lignes pour effectuer des reports de calcul de la ligne du dessus à la ligne du dessous et en ce que le circuit de sortie est un organe d'addition fournissant le résultat à partir des reports de la dernième ligne.

La description suivante, faite en regard des dessins annexés, le tout donné à titre d'exemple non limitatif, fera bien comprendre comment l'invention peut être réalisée.

La figure 1 représente un dispositif de sommation de carrés conforme à l'invention.

La figure 2 représente la structure du réseau systolique convenant pour le dispositif de la figure 1.

La figure 3 donne les références des broches d'entrées et de sorties des cellules constituant le réseau systolique de la figure 2.

La figure 4 montre le détail de réalisation d'une cellule du réseau systolique.

La figure 5 montre la structure des circuits additionneurs élémentaires convenant pour le circuit de sortie du réseau systolique.

La figure 6 montre la structure d'un circuit d'horloge nécessaire pour le fonctionnement du dispositif de sommation de carrés de la figure 1.

Les figures 7a, 7b, 7c, 7d, 7e, 7f, 7g et 7h sont destinées à représenter en fonction du temps l'évolution de différents signaux à l'intérieur du réseau systolique.

La figure 8 est destinée à montrer le temps d'activité pour le calcul des différentes cellules de la première ligne du réseau.

La figure 9 montre le détail d'un autre exemple de réalisation d'un circuit de présentation de donnée pour un réseau systolique avec un nombre réduit de colonnes.

La figure 10 montre les modifications apportées au circuit de la figure 6 pour être compatible avec le circuit de la figure 9.

La figure 11 montre un réseau systolique avec un nombre réduit de colonnes.

La figure 12 montre le détail de réalisation d'un circuit de sortie pour le réseau montré à la figure 11.

La figure 13 est destinée à montrer le temps d'activité de calcul des différentes cellules de la première ligne du réseau de la figure 11.

BREVE DESCRIPTION DU DISPOSITIF DE L'INVENTION :

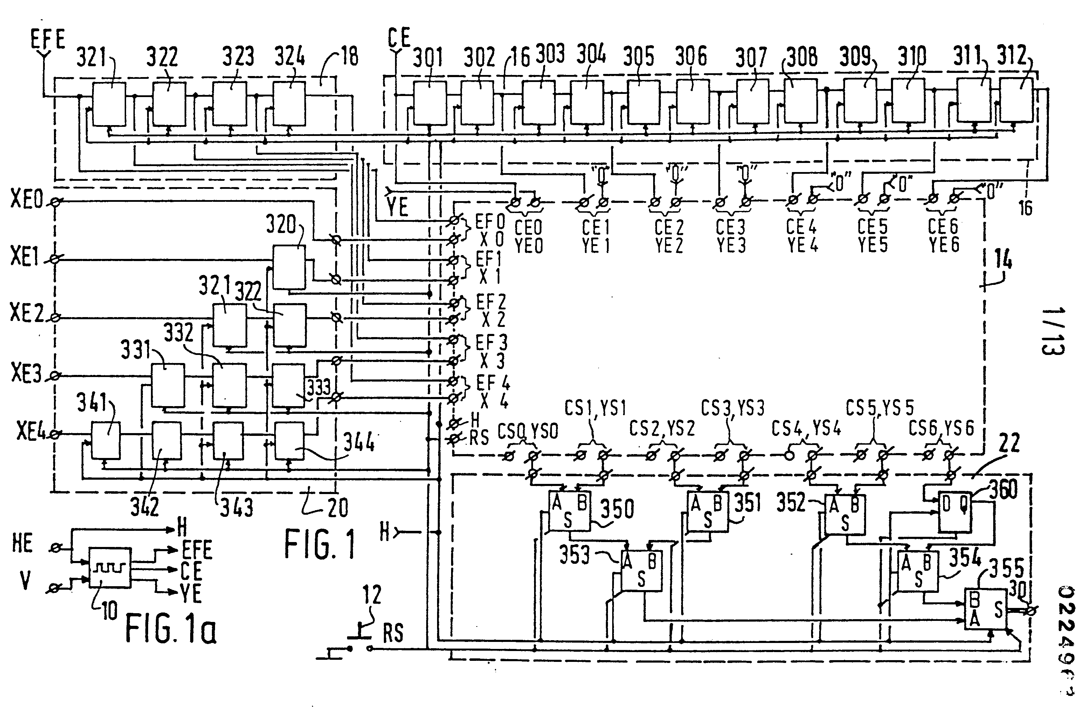

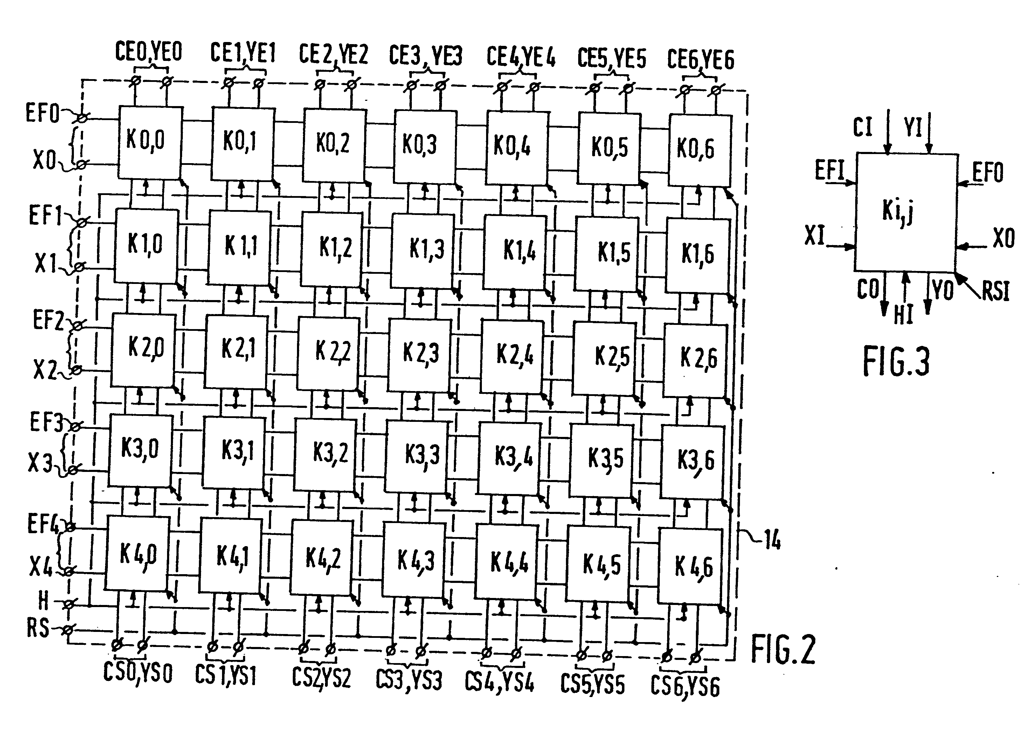

A la figure 1, on a représenté un dispositif de sommation de carrés conforme à l'invention par $n = 5$ et $m = 7$. Les différents nombres dont on peut évaluer le carré sont codés par sept éléments binaires, présentés élément binaire par élément binaire en commençant par l'élément binaire affecté du poids le plus faible, aux accès XE0, XE1, XE2, XE3 et XE4. On admet que cette présentation s'effectue au rythme de signaux H appliqués à une entrée HE d'un circuit d'horloge 10 et en plus, que cette présentation est validée par un signal V appliqué à ce circuit d'horloge 10. Comme tout circuit logique le dispositif de sommation est muni d'une commande de remise à zéro 12 que l'on a représentée sous la forme d'un bouton-poussoir ; mais cette commande peut s'effectuer de tout autre manière : par exemple c'est le circuit utilisateur qui peut fournir directement un signal logique pour provoquer cette remise à zéro. Le dispositif de sommation de carrés comporte un réseau systolique 14 dont le détail est représenté à la figure 2. A ce réseau systolique sont associés d'une part un premier circuit périphérique 16 fournissant différentes informations à des bornes YE0 CE0, YE1 CE1, YE2 CE2, YE3 CE3, YE4 CE4, YE5 CE5, YE6 CE6 du réseau et d'autre part un second circuit périphérique 18 fournissant différentes informations à des bornes EF0, EF1, EF2, EF3 et EF4. De plus, on a prévu un circuit de présentation de nombre 20 servant d'interface entre les bornes XE0, XE1, XE2, XE3 et XE4 et les bornes X0, X1, X2, X3 et X4 du réseau 14, et un circuit de sortie 22.

BREVE DESCRIPTION DU RESEAU SYSTOLIQUE :

Le réseau systolique montré en détail à la figure 2 est constitué de trente cinq cellules identiques $K_{i,j}$ ; "i" est un entier définissant la ligne où est située la cellule et varie de 0 à 4, tandis que "j" est un entier définissant la colonne où est située la cellule et varie de 0 à 6. La figure 3 représente en quelque sorte le brochage de ces cellules. On distingue des broches d'entrée verticales CI, YI, des broches de sortie verticales CO, YO, des broches d'entrée horizontales EFI et XI, des broches de sortie horizontales EFO, XO et enfin des broches d'entrée pour signaux de service HI et RSI. Les références de ces broches ne sont pas portées sur la figure 2 afin de ne pas l'alourdir. Les broches CI, YI des cellules K0,0 ; K0,1 ; ... ; K0,6 sont connectées respectivement aux bornes CE0, YE0 ; CE1, YE1 ; ... ; CE6, YE6. Les broches EFI, XI des cellules K0,0 ; K1,0 ; ... ; K4,0 sont connectées res-

pectivement aux bornes EF0, X0 ; EF1, X1 ; ... ; EF4, X4. D'une manière générale les broches d'entrée verticales sont connectées aux broches de sortie verticales de la ligne de cellule du dessus, les broches d'entrée horizontales sont connectées aux broches de sortie horizontales de la colonne située à gauche. Bien que l'on ait fait figurer les bornes CS0, YS0 ; CS1, YS1 ;...; CS6, YS6 connectées respectivement aux broches C0, Y0 des cellules K4,0 ; K4,1 ; ... ; K4,6, le circuit de sortie 22 n'est en fait connecté qu'aux bornes YS0, YS1,..., YS6.

MOYENS APPORTES PAR L'INVENTION :

Conformément à l'invention, chaque ligne de cellule est affectée au calcul du carré de chacun des nombres, les liaisons entre les broches YI et YO sont utilisées pour effectuer le report de la ligne du dessus à la ligne du dessous. Le circuit de sortie est un organe d'addition fournissant le résultat à la borne 30 à partir des signaux de report de la dernière ligne.

CONSIDERATIONS SUR L'ALGORITHME UTILISE :

La présente invention repose sur les considérations suivantes : soit un nombre B que l'on met sous la forme suivante :

$$B = b_{m-1}.2^{m-1} + b_{m-2}.2^{m-2} + ... + b_1.2 + b_0$$

où les $b_j$ sont des éléments binaires (0 ou 1) alors :

$$B^2 = (b_0.2^0 + b_1.2^1 + b_2.2^2 + b_3.2^3 +...+ b_{m-1}.2^{m-1})^2$$

En réunissant tous les doubles produits :

$$(b_i.b_j + b_j.b_i).2^{i+j} = b_i.b_j.2^{i+j+1}$$

et puisque $b^2_i = b_i$ ($b_i = 0$ ou 1), on peut écrire :

$$B^2 = b_0.2^0$$
$$+ 0.2^1$$
$$+ (b_0.b_1 + b_1).2^2$$
$$+ (b_0.b_2).2^3$$
$$+ (b_0.b_3 + b_1.b_2 + b_2).2^4$$
$$+ (b_0.b_4 + b_1.b_3).2^5$$

$$+ (b_0.b_5 + b_1.b_4 + b_2.b_3 + b_3).2^6$$

$$\text{-----------------------------------}$$

$$+ b_{m-1}.2^{2m-2}$$

ceci peut s'écrire en tenant compte des éventuelles retenues à propager :

| $b_{m-1}\ldots$ | $b_6$ | $b_5$ | $b_4$ | $b_3$ | $b_2$ | $b_1$ | $b_0$ |
|---|---|---|---|---|---|---|---|
| x | | | | | | | |
| $b_{m-1}$ | $b_6$ | $b_5$ | $b_4.$ | $b_3$ | $b_2$ | $b_1$ | $b_0$ |

| $\ldots$ | $b_0.b_5$ | $b_0.b_4$ | $b_0.b_3$ | $b_0.b_2$ | $b_0.b_1$ | 0 | $b_0$ |
|---|---|---|---|---|---|---|---|
| $+ \ldots$ | $b_1.b_4$ | $b_1.b_3$ | $b_1.b_2$ | 0 | $b_1$ | | |
| $+ \ldots$ | $b_2.b_3$ | 0 | $b_2$ | | | | |
| $+ \ldots$ | $b_3$ | | | | | | |

$$\text{-----------------------------------}$$

$$+b_{m-1}\ldots$$

$$bb_{2m-2}\ldots bb_{m-1}\ldots bb_6 \quad bb_5 \quad bb_4 \quad bb_3 \quad bb_2 \quad bb_1 \quad bb_0$$

où les $bb_i$ sont les éléments binaires de $B^2$. Chaque ligne du réseau systolique va donc effectuer cette opération.

Pour le calcul en complément à deux, on pourra se reporter à l'article intitulé "OPTIMISED BIT LEVEL SYSTOLIC ARRAY FOR CONVOLUTION" de J.V. Mc CANNY et al et paru dans IEE PROCEEDINGS, vol.131, Pt.F, N°6, OCTOBRE 1984, pages 632 à 637.

L'opération ci-dessus, où $b_{m-1}$ est l'élément binaire représentant le signe "+" par "0" et le signe "-" par "1", s'écrit alors :

$$
\begin{array}{r}
b_0 \; b_1 \; b_2 \; \ldots \; b_3 \; \ldots \; b_{m-2} \; (b_{m-1}) \\
\times \quad b_0 \; b_1 \; b_2 \; \ldots \; b_3 \; \ldots \; b_{m-2} \; (b_{m-1})
\end{array}
$$

$$
\begin{array}{llllll}
\overline{b_0(b_{m-1})} & b_0 \cdot b_{m-2} & \ldots & b_0 \cdot b_2 & b_0 \cdot b_1 & b_0 \\
+\; \overline{b_1(b_{m-1})} & b_1 \cdot b_{m-2} & b_1 \cdot b_{m-3} & \ldots & 0 & b_1 \\
& & & & & 0 \\
& & & & & 0 \\
& & & & & \vdots \\
& & & & & 0 \\
+\; \overline{b_{m-2}(b_{m-1})} & 0 & \ldots & 0 & & 0 \\
+\; \overline{(b_{m-1})} & 0 & \ldots & 1 & & 0 \\
+\; 0 & 0 & \ldots & 0 & & 0
\end{array}
$$

$$
bb_{2m-2} \;\; bb_{2m-1} \; \ldots \; bb_m \; \ldots \; bb_{m-1} \; bb_{m-2} \; \ldots \; bb_3 \; bb_2 \; bb_1 \; bb_0
$$

où le trait porté au-dessus des produits d'éléments binaires signifie que l'on considère le complément de ce produit.

Chaque ligne du réseau systolique va effectuer aussi cette opération en complément à deux. Les différentes retenues vont se propager afin que le circuit de sortie puisse en fournir la somme.

## DESCRIPTION DETAILLEE DES CELLULES DU RESEAU SYSTOLIQUE :

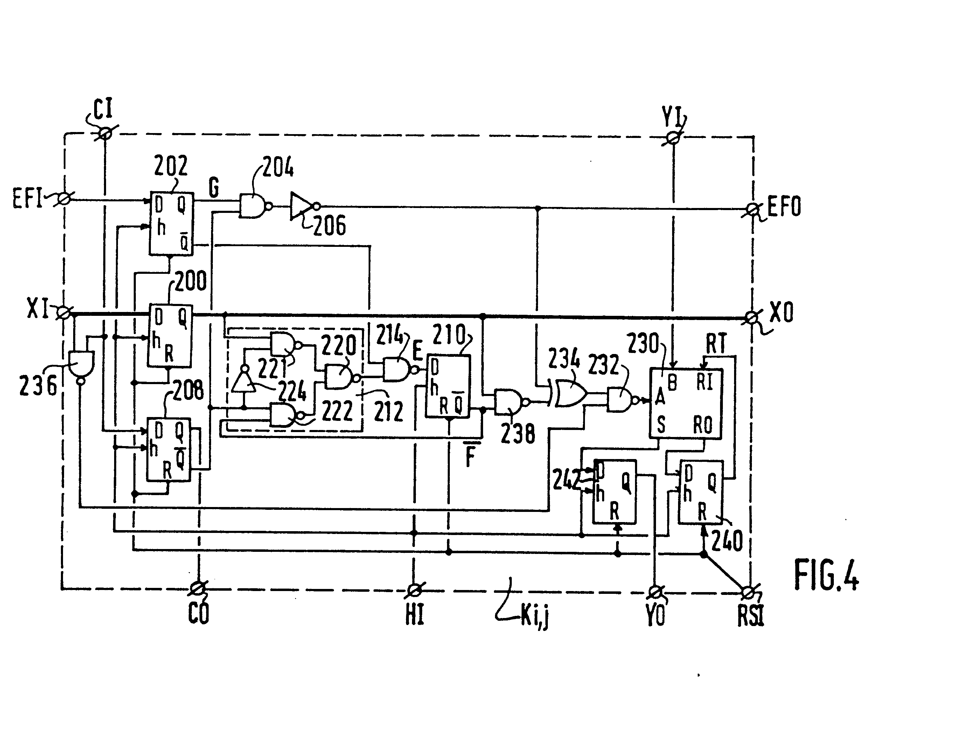

Les cellules $K_{i,j}$ (voir figure 4) du réseau systolique comportent une première bascule de type D 200 dont l'entrée D est reliée à la borne XI et dont la sortie Q est reliée à la borne XO. L'entrée d'horloge h est reliée à l'entrée HI pour recevoir les signaux provenant du circuit d'horloge 10 de sorte que les éléments binaires sont transmis de l'entrée XI à la sortie XO selon la cadence de ces signaux. Une deuxième bascule de type D portant la référence 202 est prévue pour décaler dans le temps de la période T le signal de commande EF. L'entrée D de cette bascule 202 est reliée à l'entrée EFI et la sortie Q à la sortie EFO par l'intermédiaire d'une porte NON-ET 204 et d'un inverseur de signaux logiques 206, l'ensemble se comportant comme une porte "ET". Une troisième bascule 208 de type D est utilisée pour décaler de la même durée T le signal de commande à l'entrée CI. L'entrée D de la bascule 208 est reliée à l'entrée CI, l'entrée H à l'entrée HI, la sortie Q à la sortie CO. Les deux entrées de la porte NON-ET 204 sont respectivement reliées aux sorties Q et $\overline{Q}$ des bascules 202 et 208. Une quatrième bascule de type D 210 en combinaison avec un circuit logique 212 est utilisée pour enregistrer l'élément binaire rendu disponible à la sortie de la bascule 200. L'entrée D de la bascule 210 est reliée à la sortie du circuit logique 212 par l'intermédiaire d'une porte NON-ET 214 ; cette porte 214 autorise la transmission du signal de sortie du circuit logique 212 vers l'entrée D de la bascule 210 en fonction du signal logique à la sortie $\overline{Q}$ de la bascule 202. Le circuit 212 est en fait un circuit d'aiguillage qui sélectionne soit le signal à la sortie $\overline{Q}$ de la bascule 210, soit le signal à la sortie Q de la bascule 200. Cette sélection dépend du signal enregistré dans la bascule 208. Ce circuit 212 est composé de trois portes NON-ET 220, 221 et 222 à deux entrées chacune. La sortie de la porte 220 constitue la sortie du circuit 212 ; les deux entrées de cette porte 220 sont reliées aux sorties des portes 221 et 222, une des entrées de la porte 221 reçoit le signal à la sortie de la bascule 200, une des entrées de la porte 222 est rétrocouplée vers la sortie $\bar{Q}$ de la bascule 210. Le signal à la sortie $\bar{Q}$ de la bascule 208 est appliqué tel quel à l'autre entrée de la porte 222 et par l'intermédiaire d'un inverseur 224 à l'autre entrée de la porte 221. Les cellules $K_{i,j}$ comportent également un circuit d'addition 230 muni de deux entrées d'opérande A et B, une sortie pour le résultat S, une entrée pour recevoir une retenue RI et une sortie pour fournir une retenue RO. L'entrée A est connectée à la sortie d'une porte NON-ET 232 à deux entrées dont la première est connectée à la sortie d'une porte "OU-EXCLUSIF" 234 et dont la deuxième est connectée à la sortie d'une porte NON-ET 236 à deux entrées. La première entrée de la porte 236 est connectée à l'entrée XI, la deuxième à l'entrée CI. La première des deux entrées de la porte "OU-EXCLUSIF" 234 est connectée à la sortie de l'inverseur 206 tandis que la deuxième entrée est reliée à la sortie d'une porte NON-ET 238 à deux entrées respectivement reliées à la sortie Q de la bascule 200 et à la sortie $\bar{Q}$ de la bascule 210. Les portes 232, 234, 236 et 238 permettent que le signal logique SA suivant soit appliqué à l'entrée A de l'additionneur 230 :

$$SA = CI.XI + (XO.\bar{F} \oplus EFO)$$

où : CI, XI, XO et EFO représentent les signaux aux bornes portant ces références, $\bar{F}$ le signal à la sortie $\bar{Q}$ de la bascule 210,

et où : les symboles ".", "+" et "$\oplus$" représentent les opérations logiques ET, OU et OU-EXCLUSIF.

L'entrée B de l'additionneur 230 est reliée à la borne YI, la borne RI à la sortie Q d'une cinquième bascule 240 de type D dont l'entrée D est reliée à la sortie RO de cet additionneur 230. Cette bascule 240 est destinée à emmagasiner la valeur de la retenue élaborée par le circuit 230 à la sortie RO et à la réappliquer à l'entrée RI. Une sixième bascule 242 de type D enregistre le résultat disponible à la sortie S pour le fournir à la sortie YO. Les entrées de ces bascules 240 et 242 sont reliées à la borne HI. On notera que toutes les entrées R de remise à zéro des bascules 200, 202, 208, 210, 240 et 242 sont reliées à l'entrée RSI.

FONCTIONNEMENT DES CELLULES DU RESEAU SYSTOLIQUE :

Il est tout d'abord rappelé que les bascules 200, 202, 208 et 242 servent respectivement au décalage, au rythme des signaux d'horloge appliqués à la borne HI :

- des éléments binaires "$b_i$" passant de XI à XO
- de la valeur du signal passant de EFI à EFO
- de la valeur du signal de retenue passant de CI à CO
- de la valeur du signal passant de YI à YO, augmentée au passage par la valeur du signal appliqué à l'entrée A de l'additionneur 230.

La bascule 210 enregistre les éléments binaires à la sortie XO en fonction des considérations suivantes, basées sur la valeur de G (signal de sortie de la bascule 202) et de la valeur du signal CO, ce qui peut s'écrire :

- Si G = 1      E = 1
- Si G = 0 et CO = 1   E = $\overline{XO}$
- Si G = 0 et CO = 0   E = $\overline{F}$

donc :

- Si G = 0 et CO = 0, le signal à la sortie XO garde la valeur qu'il avait avant l'apparition de la transition "actif" du signal H.

- Si G = 0 et CO = 1, le signal à la sortie XO est enregistré dans la bascule 210.

- Si G = 1 la bascule 210 est mise à zéro. On notera alors que pour CO = 1 l'élément binaire à la sortie XO est mémorisé dans la bascule 210 et que pour G = 1 la bascule 210 est reinitialisée.

- L'additionneur 230 calcule la somme S. Si on se place avant l'arrivée d'une valeur "1" pour le signal CI, la bascule est à "0" et l'on a EFO = 0, alors :

$$S = YI \oplus RT$$

(où RT est la valeur du signal à la sortie de la bascule 240).

Si on considère l'instant t où CI = 1, on peut écrire successivement :

à     t  : CI = 1           $S = YI + RT + XI$

à t + T  : CI = 0, F = 0    $S = YI + RT$

à t + 2T : CI = 0, $F = b_i$   $S = YI + RT + b_i.XO$

où T est la période de cadencement du traitement.

Si on appelle t + KT l'instant où survient la valeur EFO = 1, alors :

$$S = YI \oplus RT + \overline{b_i.XO}$$

puis CI = 0, F = 0, $S = YI \oplus RT$.

On notera que le signal EFO = 1 permet d'une part, de faire le complément du signal XO.F soit $\overline{XO.F}$ ce qui est nécessaire lorsque les nombres sont codés selon la numérotation en complément à deux et d'autre part, de remettre à zéro la bascule 210 pour le calcul suivant.

- L'ensemble logique formé par la porte NON-ET 204 et l'inverseur 206 permet d'arrêter le passage du signal logique venant de EFI lorsqu'on a simultanément CI = 1 et EFI = 1 (mais la bascule 210 est remise tout de même à zéro). En effet, si CI = EFI = 1 la cellule reçoit le dernier élément binaire, c'est donc celui qui indique le signe. Il ne doit donc plus apparaître de produit partiel. Or, à la période d'horloge suivante, en l'absence de cet ensemble logique, on aurait EFO = 1 d'où un produit partiel parasite $\overline{XO.F} = 1$. Pour éviter ce produit partiel on utilise la fonction logique EFO = $\overline{G.CO}$, ce qui fait que EFO = 0 si CO = 1.

DESCRIPTION DES CIRCUITS PERIPHERIQUES :

Le premier circuit périphérique 16 est formé d'une série de douze bascules de type D 301, 302,... 312 montées en registre à décalage. L'entrée de donnée de la bascule 301 re-

0224963

- 12 -

çoit un signal CE issu du circuit 10. Le signal CE est appliqué tel quel à l'entrée CEO du réseau 14, les signaux aux sorties des bascules 302, 304, 306, 308, 310 et 312 sont appliqués aux entrées CE1, CE2, CE3, CE4, CE5 et CE6. A l'entrée YEO on applique un signal YE issu du circuit 10, tandis qu'aux entrées CE1, CE2, CE3, CE4, CE5 et CE6 on applique en permanence un signal de valeur logique "0". Le décalage du signal CE s'effectue au rythme des signaux H appliqués aux entrées d'horloge des bascules 301 à 312. L'entrée de remise à zéro de ces bascules reçoit le signal RS. Le deuxième circuit périphérique 18 est formé lui aussi de bascules D montées en registre à décalage. Ces bascules au nombre de quatre portent respectivement les références 321, 322, 323 et 324. L'ensemble de ces bascules reçoit un signal EFE issu du circuit 10 et appliqué tel quel à l'entrée EFO du réseau 14. Les signaux aux sorties des bascules 321, 322, 323 et 324 sont appliqués respectivement aux entrées du réseau systolique EF1, EF2, EF3 et EF4. Les entrées pour signaux d'horloge de ces bascules reçoivent le signal H et les entrées de remise à zéro le signal RS.

DESCRIPTION DU CIRCUIT DE PRESENTATION :

Le circuit de présentation 20 est constitué par une liaison directe entre les bornes XEO et XO, par une bascule de type D 320 dont l'entrée de donnée est reliée à la borne XE1 et la sortie Q à la borne X1, par un ensemble de deux bascules D 321 et 322 montées en registre à décalage interconnectant les bornes XE2 et X2, par un ensemble de trois bascules D 331, 332, 333 montées en registre à décalage interconnectant les bornes XE3 et X3 et par un ensemble de quatre bascules 341, 342, 343 et 344 interconnectant les bornes XE4 et X4. Les entrées d'horloge de ces bascules reçoivent le signal H, et l'entrée de remise à zéro le signal RS.

DESCRIPTION DU CIRCUIT DE SORTIE :

Le circuit de sortie 22 est constitué par cinq circuits additionneurs élémentaires 350, 351, 352, 353, 354 et 355 et par une bascule de type D 360 qui constitue ainsi simplement un circuit d'addition avec "0". Ces circuits additionneurs élémentaires sont munis de deux entrées d'opérande A et B qui sont reliées pour le circuit 350 aux bornes YS0 et YS1, pour le circuit 352 aux bornes YS2 et YS3, pour le circuit 353 aux sorties S des circuits 350 et 351, pour le circuit 354 aux sorties S et Q du circuit 352 et de bascule 360 et pour le circuit 355 aux sorties S des circuits 353 et 354. La sortie S du circuit 355 constitue la borne de sortie 30. L'entrée D de la bascule 360 est reliée à la borne YS6. Les circuits additionneurs élémentaires sont munis d'une entrée pour recevoir les signaux H et d'une entrée de remise à zéro pour les signaux RS, tout comme la bascule 360.

DESCRIPTION DU CIRCUIT ADDITIONNEUR ELEMENTAIRE :

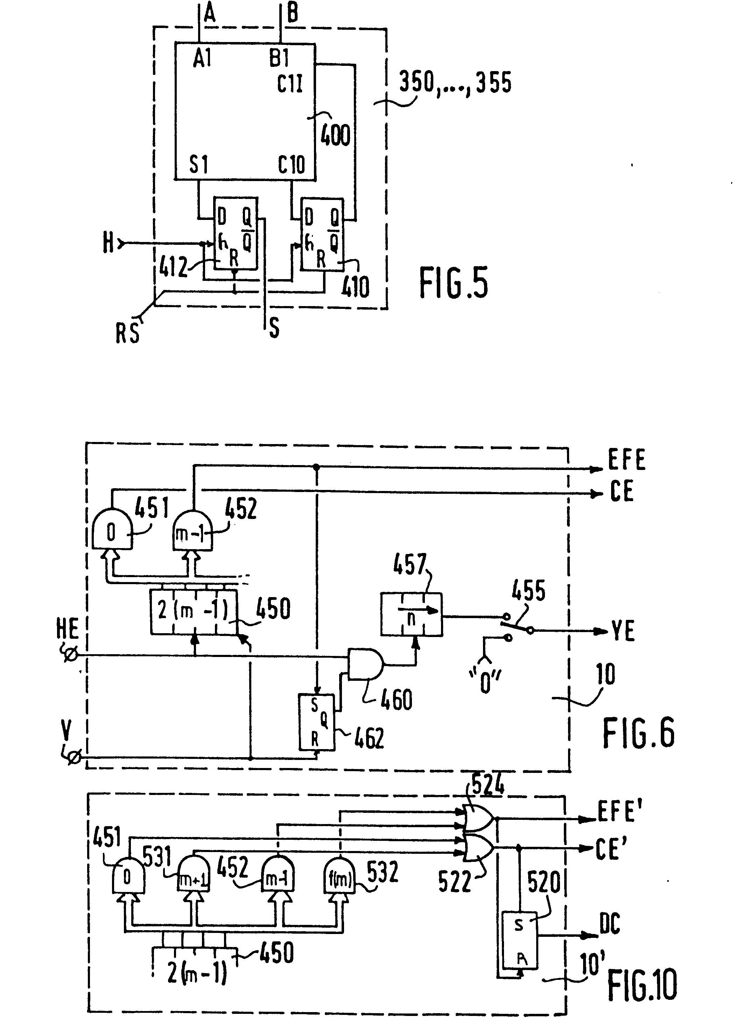

A la figure 5, on a représenté en détail la constitution d'un circuit additionneur élémentaire. Celui-ci est formé à partir d'un additionneur complet à 1 élément binaire portant la référence 400. Ce dernier est muni d'entrées d'opérande A1 et B1 qui constituent les entrées A et B du circuit additionneur élémentaire. L'additionneur complet à un élément binaire est muni aussi d'une entrée pour retenue C1I connectée à la sortie d'une bascule de type D 410, d'une sortie C10 pour retenue connectée à l'entrée D de la bascule 410 et enfin d'une sortie de résultat S1 connectée à l'entrée D d'une bascule de type D portant la référence 412. La sortie Q de cette bascule constitue la sortie S du circuit additionneur élémentaire 350, ..., 355. Les entrées d'horloge de ces bascules 410 et 412 reçoivent le signal H et leurs entrées de remise à zéro le signal RS.

DESCRIPTION DU CIRCUIT D'HORLOGE :

A la figure 6, on a représenté en détail la constitution du circuit d'horloge 10. Ce circuit 10 est constitué à partir d'un compteur 450 comptant jusqu'à douze (ou plus généralement un compteur modulo "2(m-1)"). Il compte les transitions actives du signal H appliqué à la borne HE si le signal de validation appliqué à la borne V a une valeur convenable. La borne V est reliée à l'entrée de remise à zéro de ce compteur 450. Ainsi si le signal appliqué en V ne valide pas le nombre, le compteur est maintenu à zéro ; si ce signal valide le nombre le compteur est libéré et son contenu évolue depuis "0". Un premier décodeur 451 fournit le signal CE ; celui-ci prend la valeur "1" pour le contenu égal à "0" du compteur 450 et un deuxième décodeur 452 fournit le signal EFE ; ce signal EFE prend la valeur "1" pour le contenu égal à six du compteur (plus généralement "m-1"). En notation binaire naturelle le signal $YE = 0$ ; pour cela un commutateur à deux positions 455 impose, lorsqu'il est mis dans une première position, que $YE = 0$. En notation en complément à deux, le commutateur 455 est mis dans sa deuxième position. Dans ce cas, le signal YE est le signal de sortie d'un circuit de retenue formé d'un registre à décalage 457 contenant la valeur "n". La commande de décalage de ce registre s'effectuant aussi au rythme du signal H n'est autorisée que lorsque le contenu du registre est égal à six ou (m-1). Pour cela, on a prévu une porte ET 460 à deux entrées dont la première est reliée à la borne HE et la deuxième à la sortie Q d'une bascule RS 462, la sortie de cette porte étant reliée à la commande de décalage du registre 457. L'entrée R de la bascule 462 est reliée à la borne V et la borne S à la sortie du décodeur 452.

Pour comprendre l'utilité de ce signal YE il faut considérer l'opération représentée ci-dessus pour le calcul d'un carré en complément à deux ; dans cette opération on voyait une ligne d'éléments binaires (la dernière) dans laquelle se trouvait un seul "1" correspondant au poids $2^m$. Si on a à faire la somme de deux carrés il faudra additionner ces deux "1", c'est-à-dire que l'on devra faire apparaître $(10)2^m$ ; si on a à faire la somme de 3 carrés, on aura alors $(11)2^m$ et ainsi de suite. On voit que la quantité entre parenthèses représente la valeur "n". Cette valeur "n" va donc être injectée dans le réseau systolique dès que l'on traitera les poids $2^m$.

FORMATION DE LA SOMMATION DE CARRES :

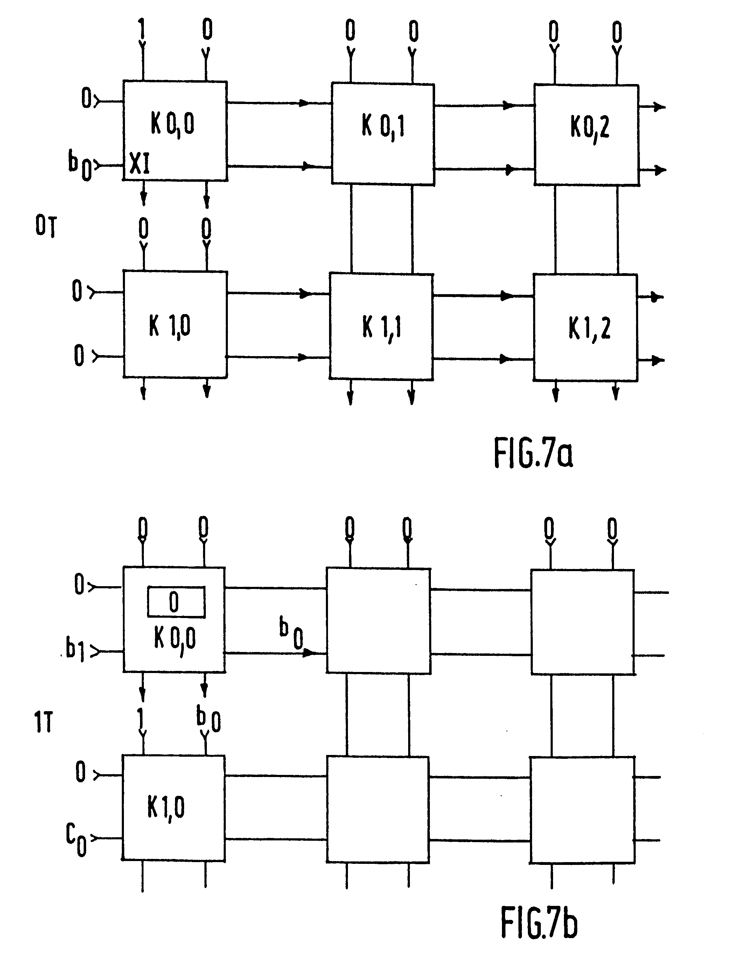

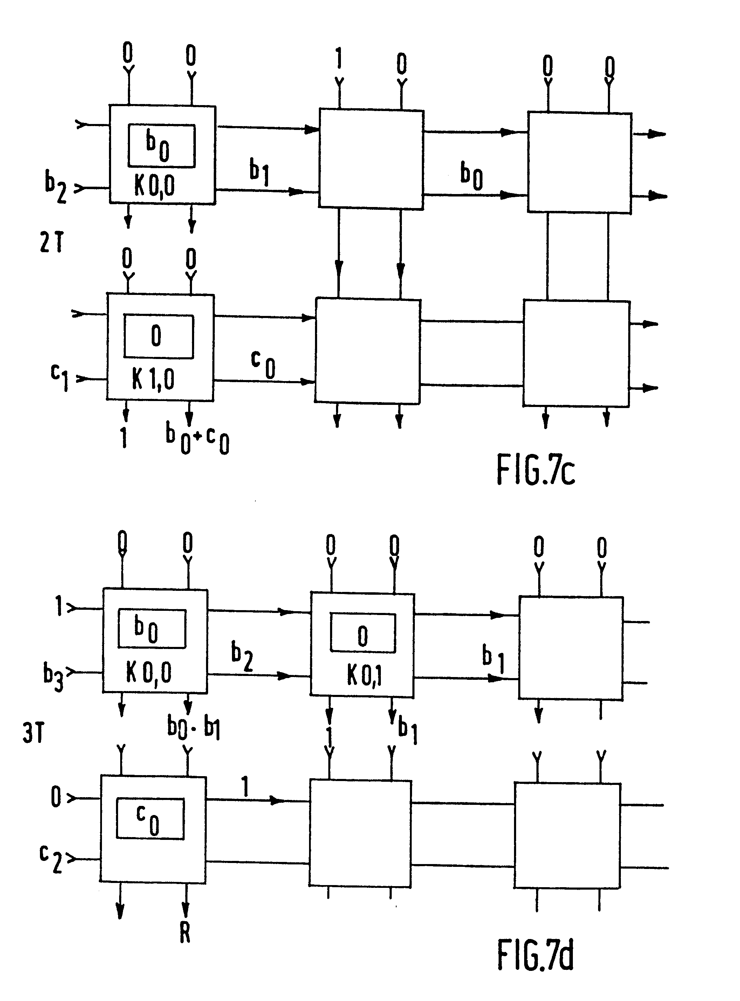

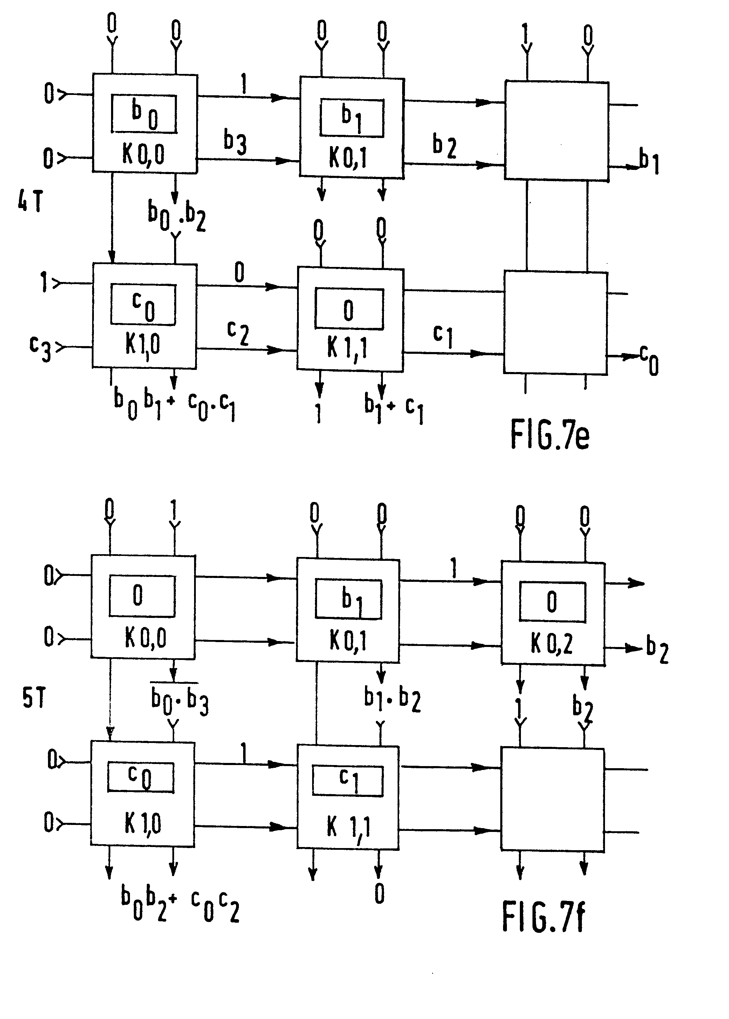

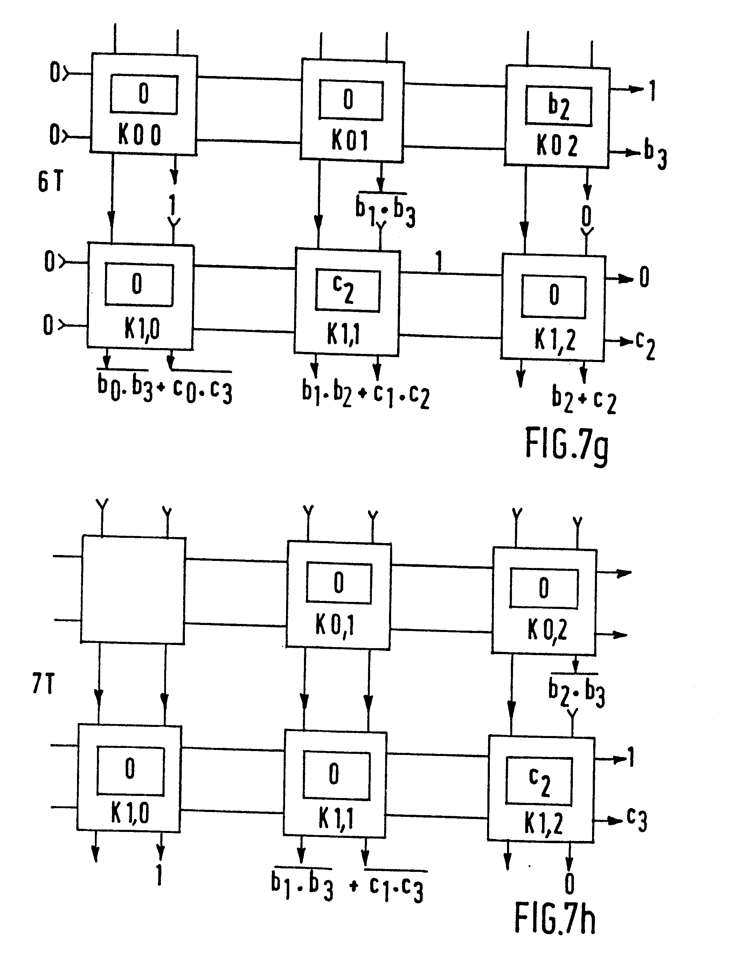

Aux figures 7a, 7b, 7c, 7d, 7e, 7f, 7g on explique comment se forme une sommation de carrés. Pour des raisons de simplicité le réseau systolique est formé seulement de deux lignes comportant 4 cellules chacune dont on ne représentera que les 3 premières. On se propose de calculer alors : $B^2 + C^2$ où $B = b_3.2^3 + b_2.2^2 + b_1.2 + b_0$
et $C = c_3.2^3 + c_2.2^2 + c_1.2 + c_0$

La figure 7a représente le réseau systolique à l'instant 0T c'est-à-dire l'instant où l'élément binaire $b_0$ est présenté à l'entrée XI de la cellule K0,0. A cet instant, puisque le contenu du compteur 450 (figure 6) est nul, le signal à la sortie du décodeur 452 est "1" CE = 1.

La figure 7b représente le réseau systolique à l'instant 1T ; à cet instant l'élément binaire $b_1$ est appliqué à l'entrée XI de la cellule K0,0 tandis qu'à l'entrée XI de la cellule K1,0 c'est l'élément $c_0$ qui est appliqué ; le signal "1" se retrouve à la sortie $C_0$ de la cellule K0,0, ayant été enregistré dans la bascule 208 (figure 4) de cette cellule à l'instant 0T. Le rectangle entourant la valeur 0 dans la cellule K0,0 indique que le signal F (signal de sortie de la bascule 210) a la valeur "0". Le signal à la sortie Y0 de la cellule K0,0 est $b_0$ ; cette valeur est le résultat de l'addition, enregistré dans la bascule 242 (figure 4), représentant l'élément binaire $b_0$ se retrouvant à l'entrée A de l'additionneur 230 de la cellule K0,0 avec la valeur "0" se retrouvant à l'entrée B de ce même additionneur. On remarque à cet instant 1T le signal à la sortie X0 de K0,0 représentant l'élément binaire $b_0$. Comme le signal à la sortie $c_0$ est "1", $b_0$ se retrouve à l'entrée D de la bascule 210, à l'instant 2T (figure 7c) $b_0$ est enregistré dans la bascule 210 de la cellule K0,0.

Sur cette figure 7c, on remarque qu'à la sortie Y0 de la cellule K1,0 on a le résultat $b_0 + c_0$ c'est-à-dire le premier élément binaire de la somme $B^2 + C^2$ ; ce premier élément binaire transitant par les additionneurs 350, 353 et 355 ne sera transmis à la borne 30 qu'après un temps égal à 3T, c'est-à-dire l'instant 5T.

A la figure 7d on a représenté l'état des signaux à cet instant 3T. Dans ce cas on a supposé qu'il y avait quatre éléments binaires à l'instant 3T. Le décodeur 453 (figure 6) fournit un signal "1" qui est appliqué à l'entrée EFI de la cellule K0,0 ; ce signal va permettre d'effectuer le complément du produit $b_0.b_3$ (c'est-à-dire $\overline{b_0.b_3}$) dans le cas où les nombres B et C sont représentés en complément à deux. Ce produit sera exécuté à l'instant 4T (figure 7e) et fourni à la sortie Y0 de la cellule K0,0 à l'instant 5T (figure 7f). Le signal "1" appliqué aux entrées EFI se transmet horizontalement dans la ligne en transitant dans les bascules 202 des cellules et se transmet verticalement en transitant dans les bascules du second circuit périphérique 18. Ainsi, on a à la sortie Y0 de la cellule K0,1 le produit $\overline{b_1.b_3}$ à l'instant 6T (figure 7g) et le produit $\overline{b_2.b_3}$ à la sortie Y0 de la cellule K0,2 à l'instant 7T (figure 7h). Ce signal de valeur "1" que l'on applique aux entrées EFI des cellules a aussi le rôle de remettre celles-ci à zéro. Ainsi, on constate qu'à l'instant 4T (figure 7e) un signal de valeur logique "1" se trouve à la sortie EFO, ce qui provoque E = 1, le signal $\overline{F}$ à la sortie $\overline{Q}$ de la bascule 210 est donc "0", ce qui est indiqué dans le carré situé dans la cellule K0,0 de la figure 7f, puis successivement, dans les cellules K0,1 (figure 7g) et K0,2 (figure 7h). Pour la ligne du dessous, cela se produit dans la cellule K1,0 à l'instant 6T (figure 7g) et dans la cellule K1,1 à l'instant 7T (figure 7h). Ainsi, le réseau systolique est prêt à recevoir de nouveaux nombres pour effectuer la somme de leur carré.

Il convient maintenant de finir d'examiner comment se forme la somme des carrés. A l'instant 2T le résultat $b_0 + c_0$ est fourni à la sortie Y0 de la cellule K1,0 ; à l'instant suivant 3T comme le signal à l'entrée YI est "0", le signal à la sortie Y0 de cette cellule K1,0 est la valeur de

la retenue de $b_0 + c_0$ (ce qui donnera les deux premiers éléments binaires de la somme des carrés).

A l'instant 4T à la sortie YO des cellules K1,0 et K1,1 on a respectivement $b_0.b_1 + c_0.c_1$ et $b_1 + c_1$ ce qui donnera alors le troisième élément binaire de la somme. On doit bien se rendre compte que dans ces sommes la retenue est enregistrée à tous les niveaux et que les additions s'effectuent élément binaire par élément binaire, celles-ci s'ajoutent aux éléments binaires de plus fort poids de la somme.

A l'instant 5T figure 7f, on voit apparaître à la sortie YO des cellules K1,0 et K1,1 les résultats respectifs : $b_0.b_2 + c_0.c_2$ et 0, résultat tenant compte du report de retenue de l'addition précédente.

A l'instant 6T on voit les résultats à la sortie YO des cellules K1,0  K1,1 et K1,2 : $\overline{b_0.b_3} + \overline{c_0.c_3}$, $b_1.b_2 + c_1.c_2$, $b_2 + c_2$.

Dans la numérotation en complément à deux, il convient d'ajouter "n" aux éléments binaires de poids trois (ou de poids "m" si on se reporte à l'opération en complément à deux posée ci-dessus). Le "1" n'apparaît qu'à l'instant 5T (figure 7f) puisque ici, n = 10 en binaire.

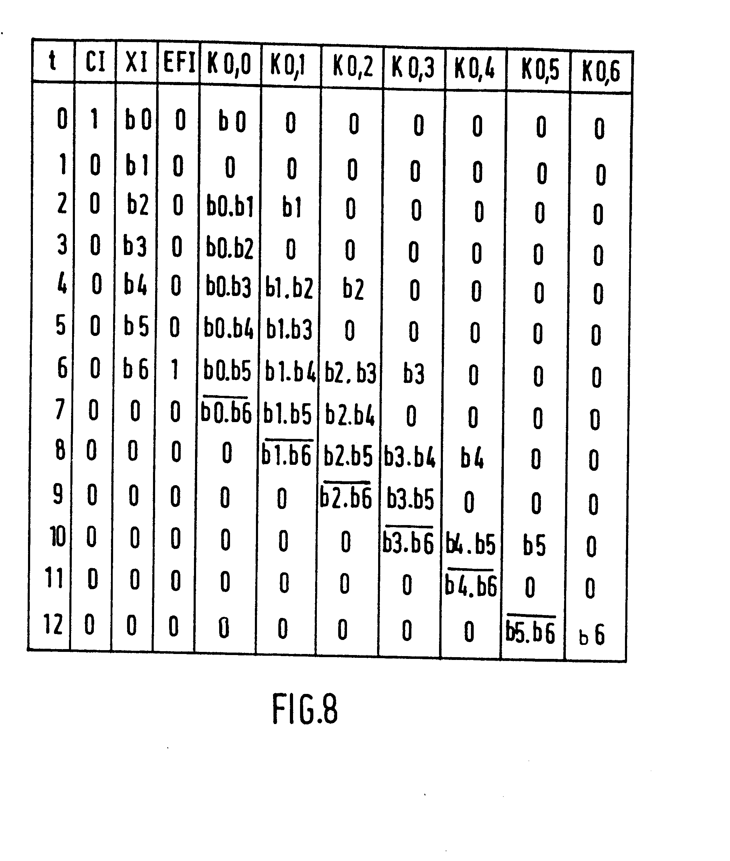

Il est intéressant de noter, en fonction du temps "t", les calculs effectués par les cellules. Sur la figure 8 on a montré les calculs successivement effectués par la première ligne de cellules K0,0 ; ...; K0,7. On voit que la succession des calculs se déroule de t = 0 pour la cellule K0,0  au temps t = 12 pour les cellules K0,5 et K0,6 (le temps sur la figure 8 est compté en multiple de T).

AUTRE EXEMPLE DE REALISATION :

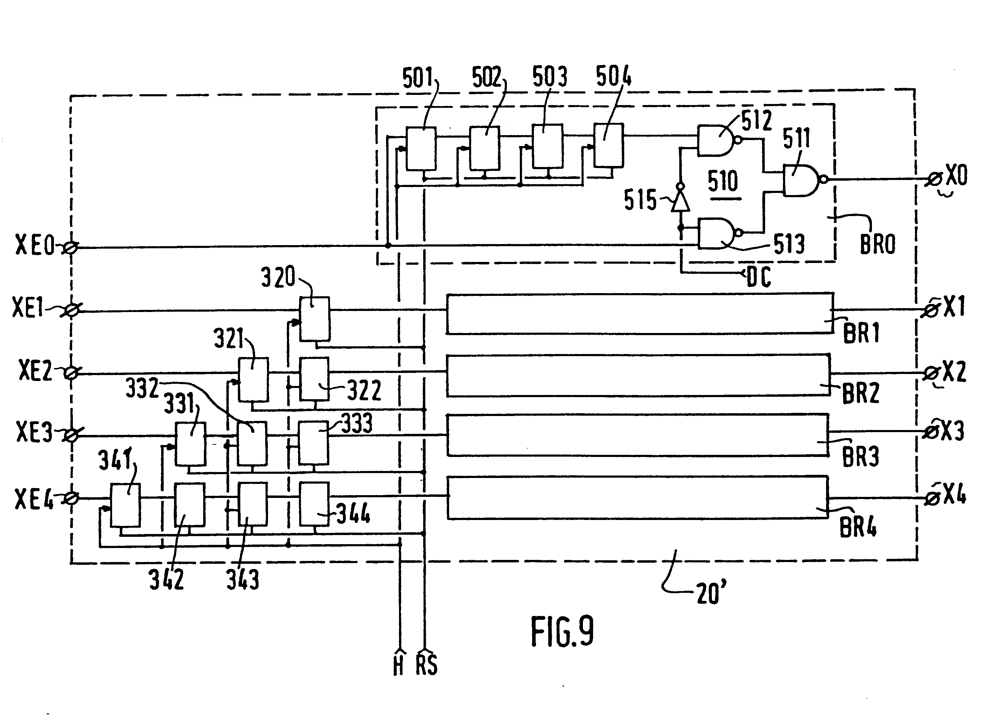

A la figure 9, on montre un autre exemple de structure d'un circuit de présentation 20' convenant pour une variante de réalisation d'un dispositif de sommation de carrés conforme à l'invention. Ce circuit comporte les mêmes éléments que ceux du circuit 20 représenté en détail à la figure 1. La figure 9 montre que l'on a ajouté cinq branches de décalage BR0, BR1, BR2, BR3 et BR4 qui s'intercalent respectivement en-

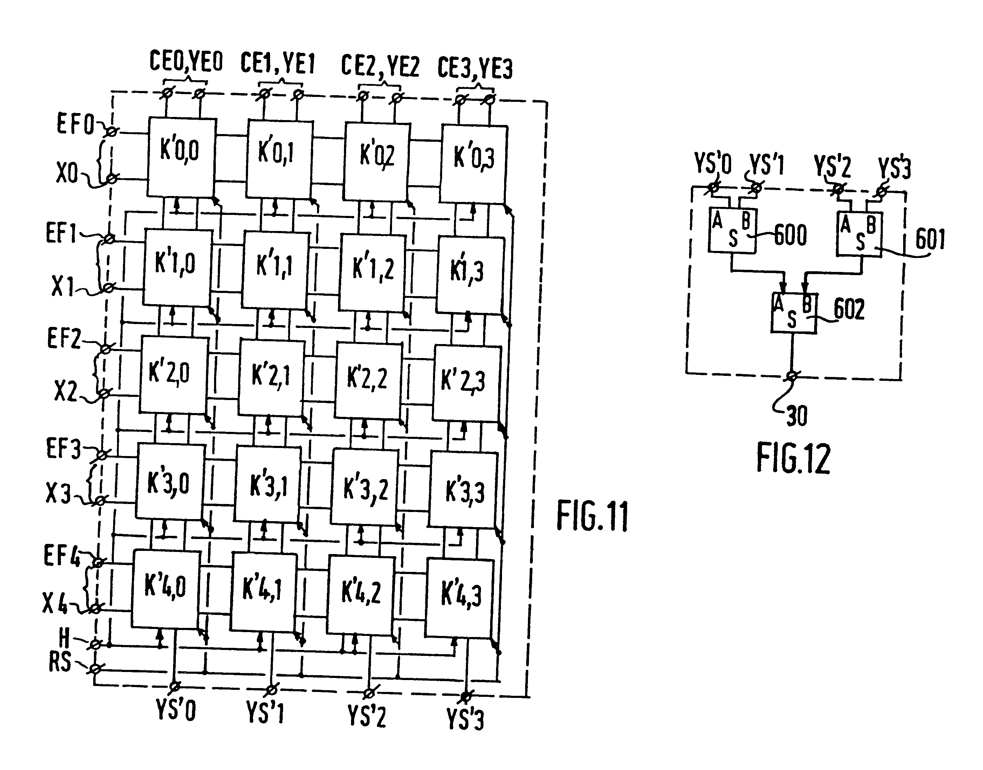

tre les bornes XE0 et X0, entre la sortie de la bascule 320 et la borne X1, entre la sortie de la bascule 322 et la borne X2, entre la sortie de la bascule 333 et la borne X3, et enfin entre la sortie de la bascule 344 et la borne X4. Comme ces cinq branches BR0 à BR4 ont la même structure, seule la branche BR0 est représentée en détail sur cette figure 9. Elle se compose de quatre bascules D montées en registre à décalage 501, 502, 503, 504 et d'un circuit d'aiguillage 510 formé d'un ensemble de trois portes NON-ET à deux entrées 511, 512 et 513 et d'un inverseur de signaux logiques 515. La sortie de la porte 511 constitue la sortie de la branche BR0. Les deux entrées de cette porte 511 sont connectées aux sorties des portes 512 et 513. Les premières entrées des portes 512 et 513 constituent les entrées du circuit d'aiguillage 510 et sont reliées pour l'une, directement à l'entrée de la branche BR0, ici cela correspond à la borne XE0, et pour l'autre à la sortie du registre à décalage formé des quatre bascules 501, 502, 503 et 504 dont l'entrée D de la première est connectée à l'entrée de la branche. La commande de l'aiguillage s'effectue au moyen d'un signal DC appliqué directement à la deuxième entrée de la porte 513 et appliqué à la deuxième entrée de la porte 512 par l'intermédiaire de l'inverseur de signaux logiques 515. Ce signal DC est élaboré par le circuit d'horloge 10' montré en détail à la figure 10. Ce circuit se distingue de celui montré à la figure 6 par le fait que les signaux EFE et CE sont transformés en signaux EFE' et CE' et que pour fournir le signal DC on a prévu une bascule de type RS 520 dont l'entrée S est reliée à la sortie d'une porte OU 522 pour recevoir le signal CE', tandis que son entrée de remise à zéro reçoit le signal CE' fourni par une porte OU 524. Le signal DC apparaît à la sortie Q de cette bascule 520. Les deux entrées de la porte OU 522 sont reliées pour l'une à la sortie du décodeur 451 et pour l'autre à la sortie du décodeur 531. Les deux entrées de la porte OU 524 sont reliées pour l'une à la sortie du décodeur 452 et pour l'autre à la sortie d'un décodeur 532. Le décodeur 531 fournit un signal actif pour un contenu du compteur 450 égal à 8 (m + 1 de façon générale) tandis que le décodeur 532 fournit ce signal actif pour un contenu égal à 10 (plus généralement si on appelle ce contenu CMP :

$$CMP = m + \frac{m-1}{2} \qquad \text{pour b impair}$$

$$CMP = m + \frac{m}{2} \qquad \text{pour b pair).}$$

Avec ce circuit de présentation 20' montré à la figure 10 le réseau systolique de la figure 11 ne comporte plus que quatre cellules au lieu de sept pour effectuer les mêmes opérations, comme cela est représenté à la figure 11 où le réseau systolique comporte quatre colonnes de cellules

K'0,0 ; K'1,0 ; ...; K'4,0

K'0,1 ; K'1,1 ; ...; K'4,1

K'0,2 ; K'1,2 ; ...; K'4,2

K'0,3 ; K'1,3 ; ...; K'4,3.

Cette réduction du nombre de colonnes est égale, c'est-à-dire que le nombre de colonnes en moins NCM est tel que :

$$NMC = \frac{m}{2} - 1 \qquad \text{pour m pair}$$

$$NMC = \frac{m-1}{2} \qquad \text{pour m impair.}$$

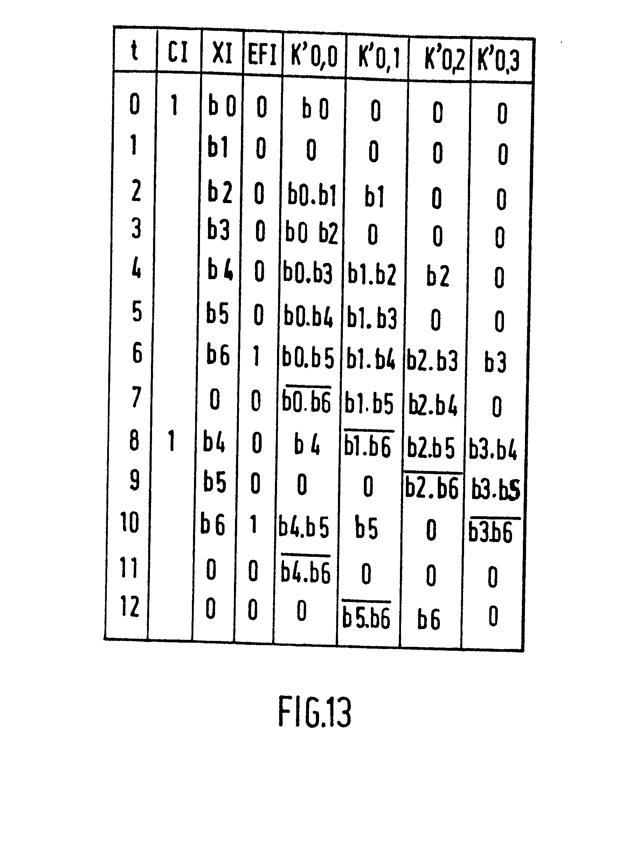

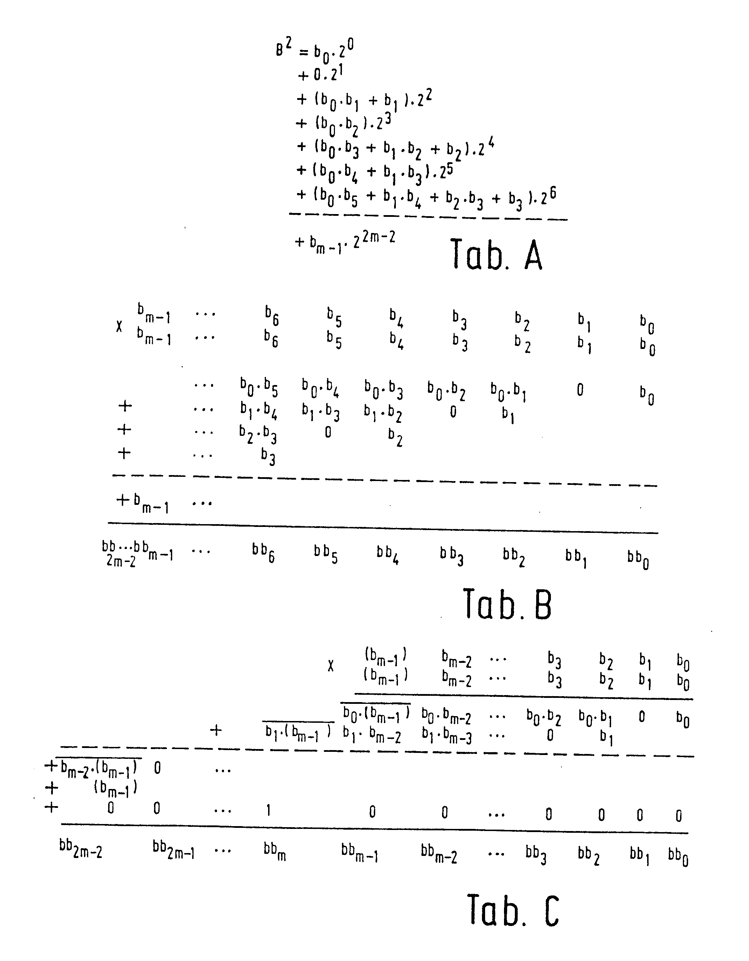

Pour un réseau systolique à quatre, le circuit de sortie montré en détail à la figure 12 ne comporte plus que trois circuits additionneurs élémentaires 600, 601 et 602. Les entrées A et B du circuit 600 sont connectées aux sorties YS'0 et YS'1 du réseau de la figure 11 et les entrées A et B de 601 aux sorties YS'2 et YS'3. Les entrées A et B de 602 sont connectées aux sorties S des circuits 600 et 601. La sortie S du circuit 602 constitue la borne 30 du dispositif de sommation de carrés. Pour comprendre cette réduction de colonnes on se reporte à la figure 8 où est schématisé le fonctionnement de la première ligne du réseau systolique à sept cellules par ligne. On constate qu'aux temps t = 6 et t = 8 seulement quatre cellules fournissent un résultat participant à la somme au carré. Le circuit 20' permet donc d'utiliser quatre cellules par ligne pour obtenir ce même résultat. On se reporte alors à la figure 13. Sur cette figure on constate que du temps $t = 0$ au temps $t = 6$ les éléments binaires $b_0$ à $b_6$ sont appliqués à l'entrée XI de la cellule K'0,0 puis à l'instant t7 on applique un "0" à cette entrée. Puis, à l'instant t8 le signal DC (figure 8) change de valeur, de sorte que l'élément binaire $b_4$ transite de la sortie de la bascule 504 à l'entrée XI de la cellule K'0,0. Il convient de noter qu'à cet instant t8, le signal CE' prend la valeur "1" correspondant à un contenu "8" du compteur 450 décodé par le décodeur 531, puis les éléments binaires $b_4$, $b_5$ et $b_6$ sont présentés à nouveau à l'entrée XI de la cellule K'0,0 aux temps $t = 8$ à $t = 10$. A l'instant $t = 11$, le signal DC prend la valeur "1" ce qui fait que l'on trouve à l'entrée XI la valeur "0", à l'instant $t = 12$ le calcul de la ligne supérieure est terminé.

Il est intéressant de comparer les figures 12 et 13. Ainsi, la valeur $b_4$ fournie par la cellule K0,4 est élaborée par la cellule K'0,0 à l'instant $t = 8$ ; les valeurs $b_4.b_5$ et $b_5$ fournies par les cellules K0,4 et K0,5 sont élaborées par les cellules K'0,0 et K'0,1 respectivement à l'instant $t = 10$. La valeur $\overline{b_4.b_6}$ fournie par la cellule K0,4 est élaborée par la cellule K'0,0 à l'instant $t = 11$ et enfin, les valeurs $\overline{b_5.b_6}$ et $b_6$ fournies par les cellules K0,5 et K0,6 sont élaborées par les cellules K'0,1 et K'0,2 respectivement.

REVENDICATIONS :

1.          Dispositif de sommation de carrés prévu pour calculer la somme des carrés de "n" nombres à "m" éléments binaires, n et m étant des nombres entiers supérieurs ou égaux à "1" dispositif constitué à partir d'un réseau systolique qui est formé de cellules identiques disposées en lignes et colonnes recevant des signaux d'un circuit de présentation des "n" nombres et autour duquel sont disposés un premier circuit périphérique pour fournir des signaux à la ligne supérieure, un deuxième circuit périphérique pour fournir des signaux à la colonne d'entrée, et enfin un circuit de sortie connecté à la ligne inférieure, caractérisé en ce que chaque ligne du réseau est affectée au calcul du carré de chacun des nombres, en ce qu'il est prévu des liaisons entre les lignes pour effectuer des reports de calcul de la ligne du dessus à la ligne du dessous et en ce que le circuit de sortie est un organe d'addition fournissant le résultat à partir des reports de la dernière ligne.

2.          Dispositif de sommation de carrés selon la revendication 1 fonctionnant au rythme d'une horloge à fréquence 1/T, caractérisé en ce que chaque cellule comporte un premier organe de retard pour retarder de T à un accès de sortie XO un élément binaire de données présenté à un accès d'entrée XI, un organe de multiplication pour pouvoir multiplier un élément binaire à l'accès de sortie avec un élément binaire contenu dans un organe de mémoire, un organe d'addition pour additionner un élément binaire présent à un accès d'entrée de report de calcul YI avec le résultat fourni par l'organe de multiplication et pour fournir un report à un accès de sortie YO.

3.          Dispositif de sommation de carrés selon la revendication 2, caractérisé en ce que chaque cellule comporte en outre un deuxième organe de retard pour retarder de T un accès de sortie CO, un élément binaire de commande présenté à un accès d'entrée CI pour l'enregistrement dans l'organe de mémoire de l'élément binaire de donnée à l'accès XO.

4.      Dispositif de sommation de carrés selon la revendication 2 ou 3 destiné à des nombres en complément à deux, caractérisé en ce que chaque cellule comporte en outre un troisième organe de retard pour retarder de T, à un accès de sortie EFO, un deuxième élément binaire de commande présenté à un accès d'entrée EFI pour former le complément du résultat fourni par l'organe de multiplication.

5.      Dispositif de sommation de carrés selon les revendications 1 à 4, caractérisé en ce que le premier circuit périphérique est formé d'une série d'organes de retard pour retarder de 2T l'élément binaire de commande formé à l'apparition du premier élément binaire de données et pour fournir cet élément aux entrée CI des cellules de la première ligne.

6.      Dispositif de sommation de carrés selon les revendications 1 à 4 destiné à des nombres en complément à deux, caractérisé en ce que le deuxième circuit périphérique est formé d'une série d'organes de retard pour retarder de T le deuxième élément binaire de commande formé à l'apparition du $m^{ième}$ élément binaire de données.

7.      Dispositif de sommation de carrés selon les revendications 1 à 6, caractérisé en ce que le circuit de présentation est formé de "n" séries d'organes de retard affectées chacune à une entrée d'élément de données des cellules de la colonne d'entrée, ces "n" organes procurant respectivement un retard de 0, T, ... (n-1)T, tandis que le réseau systolique est formé de "m" colonnes.

8.      Dispositif de sommation de carrés selon les revendications 1 à 6, caractérisé en ce que le circuit de présentation est formé de "n" séries d'organes de retard affectées chacune à une entrée d'élément de données des cellules de la colonne d'entrée, ces "n" organes procurant respectivement un retard de 0, T, ... (n-1)T, et de "n" branches connectées en sortie de ces "n" séries d'organes de retard pour appliquer dans un premier temps directement les "m" éléments binaires de données à la colonne d'entrée et dans un deuxième temps pour

0224963

- 23 -

appliquer les k derniers éléments binaires après un temps T suivant l'apparition du dernier élément binaire de données (k = (m-1)/2 pour m impair et k = (m/2)-1 pour m pair) tandis que le réseau systolique est formé de (m-k) colonnes.

9.      Dispositif de sommation de carrés selon les revendications 1 à 8 destiné à des nombres en complément à deux, caractérisé en ce qu'il est prévu un circuit de retenue pour fournir en série le nombre "n" à l'entrée YI de la première cellule de la colonne d'entrée.

0224963

FIG.1

FIG.1a

0224963

FIG.3

FIG.2

K i,j

CI | YI
EFO
X0
RSI
YO
HI
CO
XI
EFI

K0,0 K0,1 K0,2 K0,3 K0,4 K0,5 K0,6
K1,0 K1,1 K1,2 K1,3 K1,4 K1,5 K1,6
K2,0 K2,1 K2,2 K2,3 K2,4 K2,5 K2,6
K3,0 K3,1 K3,2 K3,3 K3,4 K3,5 K3,6
K4,0 K4,1 K4,2 K4,3 K4,4 K4,5 K4,6

CE0,YE0 CE1,YE1 CE2,YE2 CE3,YE3 CE4,YE4 CE5,YE5 CE6,YE6
CS0,YS0 CS1,YS1 CS2,YS2 CS3,YS3 CS4,YS4 CS5,YS5 CS6,YS6

EF0 X0 EF1 X1 EF2 X2 EF3 X3 EF4 X4 H RS

14

FIG.4

FIG.5

FIG.6

FIG.10

0224963

FIG.7a

FIG.7b

FIG.7c

FIG.7d

0224963

FIG.7e

FIG.7f

FIG.7g

FIG.7h

0224963

| t | CI | XI | EFI | K0,0 | K0,1 | K0,2 | K0,3 | K0,4 | K0,5 | K0,6 |
|---|---|---|---|---|---|---|---|---|---|---|
| 0 | 1 | b0 | 0 | b0 | 0 | 0 | 0 | 0 | 0 | 0 |
| 1 | 0 | b1 | 0 | 0 | 0 | 0 | 0 | 0 | 0 | 0 |
| 2 | 0 | b2 | 0 | b0.b1 | b1 | 0 | 0 | 0 | 0 | 0 |
| 3 | 0 | b3 | 0 | b0.b2 | 0 | 0 | 0 | 0 | 0 | 0 |
| 4 | 0 | b4 | 0 | b0.b3 | b1.b2 | b2 | 0 | 0 | 0 | 0 |
| 5 | 0 | b5 | 0 | b0.b4 | b1.b3 | 0 | 0 | 0 | 0 | 0 |
| 6 | 0 | b6 | 1 | b0.b5 | b1.b4 | b2.b3 | b3 | 0 | 0 | 0 |
| 7 | 0 | 0 | 0 | $\overline{b0.b6}$ | b1.b5 | b2.b4 | 0 | 0 | 0 | 0 |
| 8 | 0 | 0 | 0 | 0 | $\overline{b1.b6}$ | b2.b5 | b3.b4 | b4 | 0 | 0 |
| 9 | 0 | 0 | 0 | 0 | 0 | $\overline{b2.b6}$ | b3.b5 | 0 | 0 | 0 |
| 10 | 0 | 0 | 0 | 0 | 0 | 0 | $\overline{b3.b6}$ | b4.b5 | b5 | 0 |
| 11 | 0 | 0 | 0 | 0 | 0 | 0 | 0 | $\overline{b4.b6}$ | 0 | 0 |
| 12 | 0 | 0 | 0 | 0 | 0 | 0 | 0 | 0 | $\overline{b5.b6}$ | b6 |

FIG.8

FIG.9

10-XIII-PHF 85-590

0224963

0224963

FIG.12

601

602

600

YS'3
YS'2
YS'1
YS'0
YE2
YE1
YE0

30

FIG.11

CE0,YE0  CE1,YE1  CE2,YE2  CE3,YE3

K'0,3  K'1,3  K'2,3  K'3,3  K'4,3
K'0,2  K'1,2  K'2,2  K'3,2  K'4,2
K'0,1  K'1,1  K'2,1  K'3,1  K'4,1
K'0,0  K'1,0  K'2,0  K'3,0  K'4,0

EF0  X0  EF1  X1  EF2  X2  EF3  X3  EF4  X4  H  RS

YS'0  YS'1  YS'2  YS'3

0224963

| t | CI | XI | EFI | K'0,0 | K'0,1 | K'0,2 | K'0,3 |
|---|----|----|-----|-------|-------|-------|-------|
| 0 | 1 | b0 | 0 | b0 | 0 | 0 | 0 |
| 1 |   | b1 | 0 | 0 | 0 | 0 | 0 |
| 2 |   | b2 | 0 | b0.b1 | b1 | 0 | 0 |
| 3 |   | b3 | 0 | b0 b2 | 0 | 0 | 0 |
| 4 |   | b4 | 0 | b0.b3 | b1.b2 | b2 | 0 |
| 5 |   | b5 | 0 | b0.b4 | b1.b3 | 0 | 0 |
| 6 |   | b6 | 1 | b0.b5 | b1.b4 | b2.b3 | b3 |
| 7 |   | 0 | 0 | $\overline{b0.b6}$ | b1.b5 | b2.b4 | 0 |
| 8 | 1 | b4 | 0 | b4 | $\overline{b1.b6}$ | b2.b5 | b3.b4 |
| 9 |   | b5 | 0 | 0 | 0 | $\overline{b2.b6}$ | b3.b5 |
| 10 |   | b6 | 1 | b4.b5 | b5 | 0 | $\overline{b3.b6}$ |
| 11 |   | 0 | 0 | $\overline{b4.b6}$ | 0 | 0 | 0 |
| 12 |   | 0 | 0 | 0 | $\overline{b5.b6}$ | b6 | 0 |

FIG.13

$$B^2 = b_0 \cdot 2^0$$
$$+ 0 \cdot 2^1$$
$$+ (b_0 \cdot b_1 + b_1) \cdot 2^2$$
$$+ (b_0 \cdot b_2) \cdot 2^3$$
$$+ (b_0 \cdot b_3 + b_1 \cdot b_2 + b_2) \cdot 2^4$$
$$+ (b_0 \cdot b_4 + b_1 \cdot b_3) \cdot 2^5$$
$$+ (b_0 \cdot b_5 + b_1 \cdot b_4 + b_2 \cdot b_3 + b_3) \cdot 2^6$$
$$\overline{\phantom{+++++++++++++++++++++++++}}$$
$$+ b_{m-1} \cdot 2^{2m-2}$$

## Tab. A

| X | $b_{m-1}$ | ... | $b_6$ | $b_5$ | $b_4$ | $b_3$ | $b_2$ | $b_1$ | $b_0$ |
|---|---|---|---|---|---|---|---|---|---|
|   | $b_{m-1}$ | ... | $b_6$ | $b_5$ | $b_4$ | $b_3$ | $b_2$ | $b_1$ | $b_0$ |
|   |   | ... | $b_0 \cdot b_5$ | $b_0 \cdot b_4$ | $b_0 \cdot b_3$ | $b_0 \cdot b_2$ | $b_0 \cdot b_1$ | 0 | $b_0$ |
| + |   | ... | $b_1 \cdot b_4$ | $b_1 \cdot b_3$ | $b_1 \cdot b_2$ | 0 | $b_1$ |   |   |
| + |   | ... | $b_2 \cdot b_3$ | 0 | $b_2$ |   |   |   |   |
| + |   | ... | $b_3$ |   |   |   |   |   |   |
| $+ b_{m-1}$ | ... |   |   |   |   |   |   |   |   |
| $bb \ldots bb_{m-1}$ $_{2m-2}$ | ... | $bb_6$ | $bb_5$ | $bb_4$ | $bb_3$ | $bb_2$ | $bb_1$ | $bb_0$ |

## Tab. B

| X | $(b_{m-1})$ | $b_{m-2}$ | ... | $b_3$ | $b_2$ | $b_1$ | $b_0$ |
|---|---|---|---|---|---|---|---|
|   | $(b_{m-1})$ | $b_{m-2}$ | ... | $b_3$ | $b_2$ | $b_1$ | $b_0$ |

| | | | | $\overline{b_0 \cdot (b_{m-1})}$ | $b_0 \cdot b_{m-2}$ | ... | $b_0 \cdot b_2$ | $b_0 \cdot b_1$ | 0 | $b_0$ |
| + | | $\overline{b_1 \cdot (b_{m-1})}$ | $b_1 \cdot b_{m-2}$ | $b_1 \cdot b_{m-3}$ | ... | | 0 | $b_1$ | | |
| $+ \overline{b_{m-2} \cdot (b_{m-1})}$ | 0 | ... | | | | | | | | |
| $+ (b_{m-1})$ | | | | | | | | | | |
| + 0 | 0 | ... | 1 | 0 | 0 | ... | 0 | 0 | 0 | 0 |
| $bb_{2m-2}$ | $bb_{2m-1}$ | ... | $bb_m$ | $bb_{m-1}$ | $bb_{m-2}$ | ... | $bb_3$ | $bb_2$ | $bb_1$ | $bb_0$ |

## Tab. C

Office européen
des brevets

RAPPORT DE RECHERCHE EUROPEENNE

0224963
Numero de la demande

EP 86 20 2097

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | PROCEEDINGS OF THE 7TH SYMPOSIUM ON COMPUTER ARITHMETIC, Urbana, Illinois, US, 4-6 juin 1985, pages 173-180, IEEE; L. DADDA: "Squarers for binary numbers in serial form" * Page 174, colonne 3, ligne 27 - page 175, colonne 6, ligne 14; figures 2-4 * | 1 | G 06 F 7/552 |
| A | EP-A-0 144 123 (NATIONAL RESEARCH DEVELOPMENT CORP.) * Page 3, ligne 11 - page 4, ligne 11 * | 1,2 | |
| A | COMPUTER, vol. 15, no. 1, janvier 1982, pages 37-46, IEEE, Long Beach, California, US; H.T. KUNG: "Why systolic architectures ?" | | |

DOMAINES TECHNIQUES RECHERCHES (Int Cl 4)

G 06 F 7/00

Le present rapport de recherche a été établi pour toutes les revendications

| Lieu de la recherche | Date d'achèvement de la recherche | Examinateur |
|---|---|---|
| LA HAYE | 12-02-1987 | NUSSBAUMER C.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82